# EUROPÄISCHE PATENTANMELDUNG

(11) **EP 0 882 960 A2**
(43) Veröffentlichungstag der Anmeldung: **09.12.1998**
(21) Anmeldenummer: 98108269.6
(22) Anmeldetag: 06.05.1998
(51) Int. Cl.: G01G 15/00

(54) **Ausgleichsvorrichtung und -verfahren**

(30) Priorität: 05.06.1997 DE 19723638
(71) Anmelder: ALPENLAND MASCHINENBAU HAIN & CO. KG, 83543 Rott am Inn (DE)
(72) Erfinder: Reisinger, Gerhard, 82008 Unterhaching (DE); Gässler, Johann, 84478 Waldkraiburg (DE)
(74) Vertreter: Finsterwald, Martin, Dr.

(57) **Zusammenfassung**

Die Erfindung betrifft eine Ausgleichsvorrichtung zur Vereinheitlichung des Gewichts von Stückgutstapeln mit wenigstens einem Normalförderer für im wesentlichen Sollgewicht aufweisende Stückgutstapel, zumindest einem Ausgleichsförderer für vom Sollgewicht abweichende Stückgutstapel und einer Verteilereinheit, mit der angelieferte Stückgutstapel gewichtsabhängig zwischen dem Normalförderer und dem Ausgleichsförderer verteilbar sind, wobei der Ausgleichsförderer zur Unterscheidung ihm übergebener Stückgutstapel anhand ihres Gewichts ausgebildet ist.

Die Erfindung betrifft außerdem ein Verfahren zum Vereinheitlichen des Gewichts von Stückgutstapeln, bei dem angelieferte Stückgutstapel automatisch in Abhängigkeit von ihrem Gewicht auf wenigstens eine Normalförderstrecke für im wesentlichen Sollgewicht aufweisende Stückgutstapel und zumindest eine Ausgleichsförderstrecke für vom Sollgewicht abweichende Stückgutstapel aufgeteilt werden, wobei die der Ausgleichsförderstrecke übergebenen Stückgutstapel anhand ihres Gewichts unterschieden werden und deren Gewicht jeweils vor dem Verlassen der Ausgleichsförderstrecke durch vorzugsweise manuelles Nachlegen oder Wegnehmen von Produktstücken an das Sollgewicht angeglichen wird.

## Beschreibung

Die Erfindung betrifft eine Ausgleichsvorrichtung sowie ein Verfahren zur Vereinheitlichung des Gewichts von Stückgutstapeln.

Derartige Stückgutstapel sind beispielsweise einzeln zu verpackende Stapel aus Käse- oder Wurstscheiben. In vielen Fällen ist es wünschenswert, daß die verpackten Stapel ein einheitliches Sollgewicht aufweisen, damit sie mit einheitlichen Etiketten versehen werden können und vor dem Versand nicht einzeln gewogen werden müssen.

Beim Zusammenfassen der beim Aufschneiden von Käse- oder Wurstblöcken anfallenden Produktscheiben zu Stapeln kommt es häufig vor, daß aufgrund variierender Scheibendicken, Scheibenformen und/oder einer unterschiedlicher Anzahl von Scheiben pro Stapel die individuellen Stapelgewichte in teilweise erheblichem Umfang voneinander abweichen. Diese Gewichtsunterschiede lassen sich auch bei optimaler Schnittregulierung der mit hohen Schnittgeschwindigkeiten arbeitenden industriellen Schneidemaschinen nicht vollständig vermeiden.

Es ist somit eine Aufgabe der Erfindung, eine Ausgleichsvorrichtung sowie ein Verfahren zu schaffen, die einen möglichst einfachen und schnellen Ausgleich des Gewichts von Stückgutstapeln bei geringem Ausschuß gestatten.

Diese Aufgabe wird erfindungsgemäß im wesentlichen dadurch gelöst, daß die Ausgleichsvorrichtung einen Normalförderer für im wesentlichen Sollgewicht aufweisende Stückgutstapel, zumindest einen Ausgleichsförderer für vom Sollgewicht abweichende Stückgutstapel und eine Verteilereinheit umfaßt, mit der angelieferte Stückgutstapel gewichtsabhängig zwischen dem Normalförderer und dem Ausgleichsförderer verteilbar sind, wobei der Ausgleichsförderer zur Unterscheidung ihm übergebener Stückgutstapel anhand ihres Gewichts ausgebildet ist.

Die Erfindung ermöglicht somit ein Umleiten auszugleichender Stückgutstapel, ohne dabei die Bewegung der von einer Aufschneidemaschine kommenden Stückgutstapel zu unterbrechen, so daß der Produktfluß derjenigen Stapel, die von vornherein das erforderliche Sollgewicht besitzen, nicht verlangsamt wird.

Die Unterscheidbarkeit der auf den Ausgleichsförderer umgeleiteten Stückgutstapel ermöglicht es, deren Gewicht jeweils gezielt durch Wegnehmen oder Nachlegen einer individuellen Anzahl von Produktstücken, z.B. Käse- oder Wurstscheiben, dem Sollgewicht anzugleichen.

Sowohl den Normalförderer als auch den Ausgleichsförderer verlassen dadurch nur Sollgewicht aufweisende Produktstapel, wodurch die gewünschte Vereinheitlichung des Stapelgewichts erzielt wird.

Vorzugsweise ist die erfindungsgemäße Ausgleichsvorrichtung für ein manuelles Ausgleichen der dem Ausgleichsförderer übergebenen Stapel ausgelegt. Grundsätzlich ist aber auch ein automatisches Wegnehmen und Nachlegen von Produktstücken möglich.

Nach einer bevorzugten Ausführungsform der Erfindung sind an den Ausgleichsförderer das Gewicht auszugleichender Stückgutstapel betreffende Daten übermittelbar und ist die Gewichtsabweichung jedes Stückgutstapels am Ausgleichsförderer ablesbar.

Dadurch kann das Gewicht der Stückgutstapel prinzipiell an einer beliebigen Stelle zwischen einer Aufschneidemaschine und der erfindungsgemäßen Ausgleichsvorrichtung ermittelt und dem Ausgleichsförderer zur Verfügung gestellt werden. Vorzugsweise ist die dazu erforderliche Wägeeinrichtung im wesentlichen unmittelbar vor der Verteilereinheit angeordnet. Es ist auch möglich, die Wägeeinrichtung als Teil der Verteilereinheit vorzusehen.

Um die Zuordnung zwischen einem vom Sollgewicht abweichenden Stückgutstapel und dessen am Ausgleichsförderer anzuzeigender Gewichtsabweichung zu ermöglichen, ist die erfindungsgemäße Vorrichtung derart ausgebildet, daß sie beispielsweise aus der Fördergeschwindigkeit der antransportierten Stückgutstapel und dem Zeitpunkt, zu dem ein auszugleichender Stapel gewogen wird, den Zeitpunkt berechnet, zu dem dieser Stapel den Ausgleichsförderer erreicht. Ebenso kann die korrekte Zuordnung zwischen Gewichtsabweichung und Stapel durch einen entsprechenden Taktbetrieb der Gesamtanordnung erreicht werden. Durch diese Identifizierung der auszugleichenden Stückgutstapel ist gewährleistet, daß am Ausgleichsförderer für jeden Stapel der richtige Ausgleichswert zur Verfügung steht und beispielsweise auf einer Anzeigeeinrichtung dargestellt werden kann.

Das Vorsehen wenigstens einer Einschleuseeinrichtung, mit der gemaß einem weiteren Ausführungsbeispiel der Erfindung an den Ausgleichsförderer verteilte Stückgutstapel nach erfolgtem Gewichtsausgleich in die von der Verteilereinheit dem Normalförderer übergebenen Stückgutstapel eingliederbar sind, führt zu einer in sich abgeschlossenen Ausgleichsvorrichtung, die sich ohne die Notwendigkeit größerer Umstrukturierungen der Gesamtanlage in den Förderweg beispielsweise zwischen einer Aufschneidemaschine und einer Verpackungsmaschine einfügt. Besonders vorteilhaft ist, daß die erfindungsgemäße Vorrichtung jeweils nur eine Eingangs- und eine Ausgangsförderstrecke aufweist.

Die erfindungsgemaße Vorrichtung ist nach einer bevorzugten Ausführung so ausgebildet, daß das Einschleusen der Stückgutstapel nach erfolgtem Gewichtsausgleich in Lücken zwischen den von der Verteilereinheit dem Normalförderer übergebenen Stückgutstapel erfolgt, wobei diese Lücken - wenn die Vorrichtung nur einen Normalförderer und einen Ausgleichsförderer umfaßt - in der Regel durch das Umleiten der Stückgutstapel auf den Ausgleichsförderer entstehen.

Vorzugsweise sind gemaß einer weiteren Ausführungsform der Erfindung sowohl der Normalförderer als auch der Ausgleichsförderer jeweils mit einer Sensoranordnung versehen, die eine Mehrzahl von entlang der jeweiligen Förderstrecke angeordneten, bevorzugt als Lichtschranken ausgebildeten Sensoren umfaßt und in der Lage ist, das Vorhandensein oder Fehlen von Stückgutstapeln zu einem bestimmten Zeitpunkt an einer bestimmten Position des jeweiligen Förderers zu erkennen.

Die Sensoranordnung des Normalförderers dient dazu, Lücken zwischen den von vornherein Sollgewicht aufweisenden Stapeln nachzuweisen und somit ein gezieltes Einschleusen der vom Ausgleichsförderer kommenden, auf das Sollgewicht gebrachten Stapel zu gewährleisten.

Beim Ausgleichsförderer sorgt die Sensoranordnung dafür, daß die Position jedes individuellen Stapels entlang der Förderstrecke zu jedem Zeitpunkt bekannt ist.

Dies ist besonders dann von Vorteil, wenn nach einem weiteren Ausführungsbeispiel der Erfindung der Ausgleichsförderer eine Mehrzahl von vorzugsweise im wesentlichen baugleichen Ausgleichsstationen umfaßt, an denen jeweils bevorzugt zu jedem Zeitpunkt die Gewichtsabweichung eines sich gerade an der betreffenden Ausgleichsstation befindenden Stückgutstapels ablesbar ist.

Dazu ist vorzugsweise jede Ausgleichsstation mit einer Anzeigeeinrichtung versehen, mit der die Gewichtsabweichung als Anzahl fehlender oder überzähliger Produktstücke, beispielsweise Käse- oder Wurstscheiben darstellbar ist.

Mit Hilfe der Sensoranordnung des Ausgleichsförderers kann folglich die Bewegung der Stückgutstapel von Ausgleichsstation zu Ausgleichsstation verfolgt und somit im richtigen Moment für ein Weiterschalten der Anzeigeeinrichtungen derart gesorgt werden, daß diese jeweils die Gewichtsabweichung des an der betreffenden Ausgleichsstation gerade vorliegenden Stückgutstapels anzeigt.

Gemäß einer weiteren Ausführung der Erfindung ist die Einschleuseeinrichtung derart steuerbar, daß sie nur im Anschluß an einen Gewichtsausgleich des in Förderrichtung letzten Stückgutstapels des Ausgleichsförderers in Bewegung versetzt wird. Bevorzugt wird der Ausgleichsförderer wieder angehalten, wenn an die in Förderrichtung letzte Ausgleichsstation ein noch nicht ausgeglichener Stückgutstapel übergeben wird.

Auf diese Weise wird verhindert, daß nicht ausgeglichene und damit vom Sollgewicht abweichende Stückgutstapel die Vorrichtung verlassen.

Die erfindungsgemaße Vorrichtung wird daher in zeitlicher Hinsicht optimal dadurch betrieben, daß der Gewichtsausgleich der Stückgutstapel - beginnend bei der in Förderrichtung letzten Ausgleichsstation - in Richtung der Verteilereinheit erfolgt, da auf diese Weise nachteilige Stillstandzeiten durch noch nicht ausgeglichene Stapel am Ende des Ausgleichsförderers vermieden werden.

Nach einem weiteren bevorzugten Ausführungsbeispiel der Erfindung ist ein Einschleusen eines Stückgutstapels nur nach Bestätigung eines Gewichtsausgleichs auslösbar, wobei hierzu eine manuell bedienbare, bevorzugt als Lichttaster ausgebildete Quittiereinrichtung vorgesehen ist. Vorzugsweise ist jede Ausgleichsstation mit einer im Bereich der jeweiligen Anzeigeeinrichtung angeordneten Quittiereinrichtung in Form eines Lichttasters versehen.

Eine Bedienungsperson kann daher im Anschluß an einen Gewichtsausgleich des in Förderrichtung letzten Stückgutstapels die Bewegung des Ausgleichsförderers bzw. das Einschleusen eines ausgeglichenen Stückgutstapels praktisch ohne zusätzlichen Zeitaufwand in Gang setzen, indem sie einfach ihre Hand durch den Lichtstrahl der betreffenden Lichtschranke bewegt. Dadurch wird in überaus einfacher Weise verhindert, daß nicht das gewünschte Gewicht aufweisende Stückgutstapel zwischen die Sollgewicht besitzenden Stapel des Normalförderers gelangen.

Nach einem weiteren Ausführungsbeispiel der Erfindung ist zusätzlich zu dem Normalförderer und dem Ausgleichsförderer ein Aussortierförderer vorgesehen, an den vorzugsweise mittels der Verteilereinheit Stückgutstapel übergebbar sind, deren Gewicht jeweils außerhalb eines vorgebbaren, das Sollgewicht einschließenden Toleranzbereichs liegt.

Der Aussortierförderer ermöglicht also das Aussondern von Stückgutstapeln, deren Gewicht zwar grundsätzlich ebenfalls mittels des Ausgleichsförderers an das Sollgewicht angeglichen werden könnte, jedoch derart stark vom Sollgewicht abweicht, daß ein Ausgleichsvorgang zuviel Zeit erfordern und den Gesamtbetrieb der die erfindungsgemäße Vorrichtung umfassenden Anlage in nicht akzeptabler Weise verlangsamen würde.

Durch das Vorsehen des Aussortierförderers entstehen zwischen den Stückgutstapeln des Normalförderers zusätzliche Lücken, in die vom Ausgleichsförderer kommende Stapel eingeschleust werden können.

Die Durchsatzrate der erfindungsgemäßen Vorrichtung in dieser Ausführungform hängt somit - außer von der Arbeitsgeschwindigkeit der jeweiligen Bedienungsperson und der Anzahl der pro Zeiteinheit antransportierten Stapel - von den zu erwartenden Anteilen auszugleichender und auszusortierender Stapel ab, wobei auch Spitzenzeiten zu berücksichtigen sind, in denen dem Ausgleichsförderer überdurchschnittlich viele Stapel übergeben werden.

Da dem Aussortierförderer nur solche Stapel übergeben werden, deren Gewicht außerhalb des vorgebbaren Toleranzgewichtsbereichs liegt, kann erforderlichenfalls durch Verändern von dessen Grenzwerten für eine Entlastung des Ausgleichsförderers dadurch gesorgt werden, daß dieser weniger auszugleichende Stapel erhält, daß bei diesen Stapeln weniger Produktstücke nachzulegen oder wegzunehmen sind, und daß mehr Lücken zwischen den Stapeln des Normalförderers vorhanden sind, in die die ausgeglichenen Stapel eingeschleust werden können.

Für einen optimalen Betrieb der erfindungsgemäßen Vorrichtung sind die relevanten Parameter daher bevorzugt derart aufeinander abgestimmt, daß für die Bedienungsperson auch während der erwähnten Spitzenzeiten genügend Zeit verbleibt, um zumindest an der in Förderrichtung letzten Ausgleichsstation die erforderliche Anzahl von Produktstücken nachlegen oder wegnehmen zu können, ohne daß der Normalförderer aus dem Grund verlangsamt oder angehalten werden muß.

Ein weiterer Vorteil des Aussortierförderers besteht darin, daß er einerseits durch die aussortierten Stückgutstapel einen Vorrat von Produktstücken bereitstellt, die von einer Bedienungsperson zum Erhöhen des Gewichts auszugleichender Produktstapel verwendet werden können, und daß er andererseits als Ablage für Produktstücke dienen kann, die die Bedienungsperson von zu schweren Stückgutstapeln wegnimmt.

Gemäß einer besonders bevorzugten Weiterbildung der Erfindung umfaßt der Ausgleichsförderer eine Mehrzahl aufeinanderfolgender, vorzugsweise jeweils als Förderband ausgebildeter Einzelförderer, die getrennt voneinander und/oder abschnittsweise synchron, insbesondere getaktet antreibbar sind.

Durch das taktweise erfolgende Weitergeben der auszugleichenden Stückgutstapel von Förderband zu Förderband wird erreicht, daß die Stapel vorübergehend an einer Ausgleichsstation verharren, wodurch das Ablesen der jeweiligen Gewichtsabweichung und das Nachlegen oder Wegnehmen von Produktstücken erleichtert wird.

Bevorzugt ist es, wenn eine separate Waagestation zur manuellen Erzeugung von im wesentlichen Sollgewicht aufweisenden Stückgutstapeln vorgesehen ist. Diese Waagestation kann sowohl mit der erfindungsgemäßen Vorrichtung zu einer Einheit kombiniert sein als auch als separate Einrichtung ausgebildet werden, welche im Bereich der erfindungsgemäßen Vorrichtung aufgestellt wird. Durch Vorsehung der separaten Waagestation wird es möglich, auf dem Aussortierförderer 7 befindliche Produktstücke auf die Waagestation zu legen, wobei so viele Produktstücke aufgelegt werden, daß der gebildete Stückgutstapel zumindest im wesentlichen Sollgewicht aufweist. Ein solcher, im wesentlichen Sollgewicht aufweisender Stückgutstapel kann dann manuell von der Waagestation auf einen freien Einzelförderer des Ausgleichsförderers gelegt werden, woraufhin eine Bedienungsperson an dem betreffenden Einzelförderer einen Quittierungsvorgang auslöst. Der auf diese Weise auf den Einzelförderer aufgelegte und quittierte Stückgutstapel kann dann in der beschriebenen Weise in den Förderprozeß eingeschleust werden.

Die der Erfindung zugrundeliegende Aufgabe wird außerdem im wesentlichen dadurch gelöst, daß bei dem erfindungsgemäßen Verfahren angelieferte Stückgutstapel automatisch in Abhängigkeit von ihrem Gewicht auf wenigstens eine Normalförderstrecke für im wesentlichen Sollgewicht aufweisende Stückgutstapel und zumindest eine Ausgleichsförderstrecke für vom Sollgewicht abweichende Stuckgutstapel aufgeteilt werden, wobei die der Ausgleichsförderstrecke übergebenen Stückgutstapel anhand ihres Gewichts unterschieden werden und deren Gewicht jeweils vor dem Verlassen der Ausgleichsförderstrecke durch vorzugsweise manuelles Nachlegen oder Wegnehmen von Produktstücken an das Sollgewicht angeglichen wird.

Bevorzugt wird für dieses Verfahren eine gemäß der Erfindung ausgebildete Ausgleichsvorrichtung verwendet.

Weitere vorteilhafte Ausführungsformen der Erfindung sind in den Unteransprüchen angegeben.

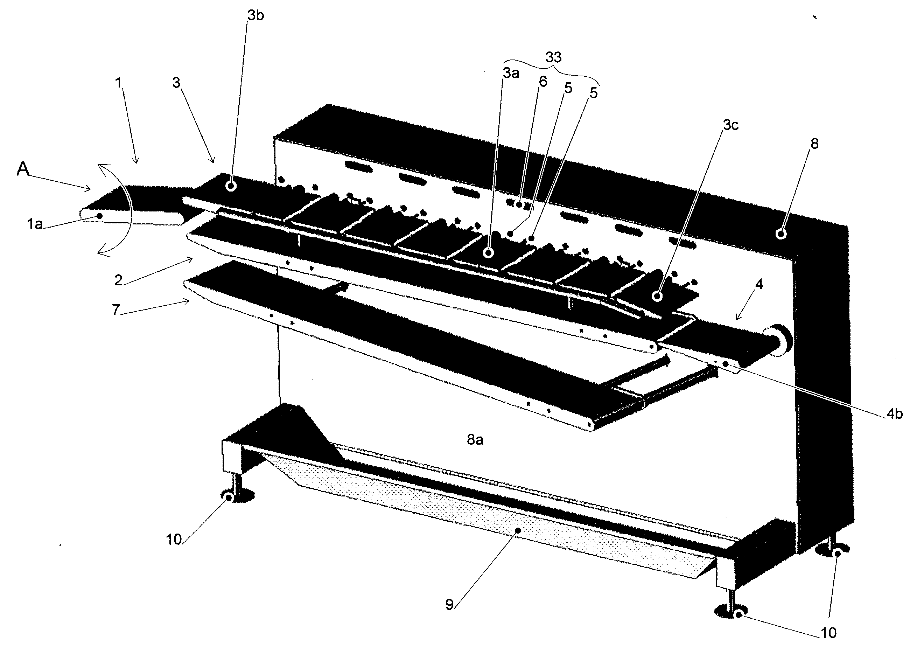

Die Erfindung wird im folgenden beispielhaft unter Bezugnahme auf die Zeichnung beschrieben, deren einzige Figur eine Ausführungsform einer gemäß der Erfindung ausgebildeten Ausgleichsvorrichtung zeigt.

Die in der Figur dargestellte Ausführungsform einer erfindungsgemäßen Ausgleichsvorrichtung ist für einen manuellen Gewichtsausgleich von Stückgutstapeln ausgelegt und umfaßt einen Normalförderer 2, einen mehrere Einzelförderer 3a, b, c umfassenden Ausgleichsförderer 3 sowie einen Aussortierförderer 7, die jeweils als Förderband ausgebildet sind.

Der Normalförderer 2 und der Ausgleichsförderer 3 sind jeweils über ihre gesamte Förderstrecke mit einem im wesentlichen konstanten geringen Abstand zu einer Vorderwand 8a eines Hauptkörpers 8 der Vorrichtung angeordnet. Dagegen nimmt dieser Abstand beim Aussortierförderer 7 in der durch einen Pfeil A angedeuteten Förderrichtung zu, wodurch der in Förderrichtung hintere Bereich des Aussortierförderers 7 für eine vor der Vorrichtung stehende Bedienungsperson gut zugänglich ist.

Die antransportierten, beispielsweise von einer Aufschneidemaschine kommenden Stückgutstapel, z.B. Käse- oder Wurstscheibenstapel, gelangen zunächst auf eine ebenfalls als Förderband ausgebildete Verteilerwippe 1, die um eine Achse 1a derart verschwenkbar ist, daß sie Stückgutstapel an einen der Förderer 2, 3 oder 7 übergeben kann.

Die Verteilerwippe 1 schließt sich an einen nicht dargestellten weiteren Förderer an, über den beispielsweise an einer Aufschneidemaschine für Käse- oder Wurstblöcke erzeugte und gestapelte Käse- bzw. Wurstscheiben der erfindungsgemäßen Ausgleichsvorrichtung zugeführt werden. Die Aufteilung der Stückgutstapel auf die einzelnen Förderer 2, 3 und 7, d.h. die Ansteuerung der Verteilerwippe 1, erfolgt in Abhängigkeit vom jeweiligen Stapelgewicht, das an einer der Verteilerwippe 1 vorgelagerten, nicht dargestellten Wägeeinrichtung ermittelt wird.

Dem Normalförderer 2 werden nur solche Stapel übergeben, die nur geringfügig in einem vorbestimmten Ausmaß von einem vorgegebenen Sollgewicht abweichen.

Der Ausgleichsförderer 3 erhält diejenigen Stapel, deren Gewicht zwar in größerem Ausmaß vom Sollgewicht abweicht, aber noch innerhalb eines vorgebbaren, das Sollgewicht vorzugsweise symmetrisch umgebenden Toleranzgewichtsbereichs liegt.

Stückgutstapel mit einem Gewicht außerhalb dieses Toleranzbereichs werden an den Aussortierförderer 7 übergeben.

Die Vorrichtung ist vorzugsweise derart ausgelegt, daß dem Ausgleichsförderer 3 diejenigen Stückgutstapel übergeben werden, deren Gewicht um eine, zwei oder drei Produktstücke, z.B. Käse- oder Wurstscheiben, über oder unter dem Sollgewicht liegt, d.h. deren Gewicht durch Wegnehmen bzw. Nachlegen einer entsprechenden Anzahl von Produktstücken derart an das Sollgewicht angeglichen werden kann, daß sie, würden sie der Vorrichtung erneut zugeführt werden, von vornherein dem Normalförderer 2 übergeben werden würden.

Mit Ausnahme des in Förderrichtung ersten Einzelförderers 3b bildet jeder Einzelförderer 3a des Ausgleichsförderers 3 zusammen mit einer ihm zugeordneten, an der Vorderwand 8a angeordneten Anzeigeeinrichtung sowie vorzugsweise als Lichtschranken ausgebildeten, unterhalb der jeweiligen Anzeigeeinrichtung angeordneten Sensoren 5 eine von in dem dargestellten Ausführungsbeispiel sieben Ausgleichsstationen 33. Die Anzeigeeinrichtungen befinden sich hinter einer transparenten Abdeckung 6.

Der erste Einzelförderer 3b dient als Anschluß für die Verteilerwippe 1 an die Ausgleichsstationen 33.

An diesen Ausgleichsstationen 33 ist jeweils ein Gewichtsausgleich der dem Ausgleichsförderer 3 übergebenen Stückgutstapel möglich.

Mittels der Anzeigeeinrichtungen ist jeweils die Abweichung des Gewichts des sich an der betreffenden Ausgleichsstation 33 befindlichen, d.h. des auf dem betreffenden Einzelförderer 3a liegenden Stückgutstapels vom Sollgewicht darstellbar, und zwar bevorzugt als Anzahl überzahliger oder fehlender Produktstücke.

Einer Bedienungsperson wird somit auf optischem Wege mitgeteilt, wieviele Produktstücke an der jeweiligen Ausgleichsstation 33 beim dort befindlichen Stückgutstapel nachzulegen bzw. wegzunehmen sind, damit dieser anschließend das Sollgewicht aufweist.

Die individuellen Gewichtsinformationen der auszugleichenden Stückgutstapel, die an der erwähnten vorgelagerten Wägeeinrichtung ermittelt werden, sind an eine separate oder in die erfindungsgemäße Vorrichtung integrierte Steuereinheit übermittelbar, die den Zeitpunkt ermittelt, an dem ein gewogener Stückgutstapel eine bestimmte Position in der Vorrichtung erreicht.

Diese Positionsbestimmung kann beispielsweise durch eine Verfolgung der Stückgutstapel mittels Sensoren, insbesondere Lichtschranken erfolgen. Alternativ kann sie auch auf der bekannten Fördergeschwindigkeit des die Stückgutstapel antransportierenden Förderers basieren. Bei einem getakteten Antrieb des der erfindungsgemäßen Vorrichtung vorgeschalteten Förderers kann ein gewogener Stückgutstapel zudem durch Abzählen der seit dem Wägevorgang verstrichenen Takte lokalisiert werden.

In jedem Fall wird auf diese Weise eine eindeutige Zuordnung zwischen jedem an den Ausgleichsförderer 3 zu übergebenden Stückgutstapel und dessen zuvor ermitteltem Gewicht gewährleistet, so daß an jeder Ausgleichsstation 33 stets die richtige, den gerade vorliegenden Stückgutstapel betreffende Gewichtsabweichung angezeigt werden kann.

Vorzugsweise sind die Einzelförderer 3a des Ausgleichsförderers 3 nicht kontinuierlich, sondern getaktet antreibbar, wobei mit jedem Takt, mit dem ein Stückgutstapel dem nächsten Einzelförderer 3a, d.h. an die nächste Ausgleichsstation 33, übergeben wird, auch die Anzeigeeinrichtungen entsprechend weitergeschaltet werden.

Der taktweise Antrieb des Ausgleichsförderers 3 hat außerdem den Vorteil, daß sich die Stückgutstapel nicht bewegen, wahrend die jeweilige Anzeigeeinrichtung abgelesen und zusätzliche Produktstücke nachgelegt oder überzählige Produktstücke weggenommen werden, wodurch für eine Bedienungsperson der manuelle Gewichtsausgleich erleichtert wird.

Die bevorzugt als Lichtschranken ausgebildeten Sensoren 5 jeder Ausgleichsstation 33 und des in Förderrichtung ersten Einzelförderers 3b dienen dazu, den Schaltzeitpunkt zu ermitteln, an dem die Übergabe eines weiterzureichenden Stückgutstapels an den nächsten Einzelförderer abgeschlossen ist und somit die Anzeigeeinrichtung der betreffenden Ausgleichsstation den Wert der ihr in Förderrichtung unmittelbar vorhergehenden Anzeigeeinrichtung - und im Fall des ersten Einzelförderers 3b den von der Wägeeinrichtung übermittelten Wert - übernehmen kann.

Der Schaltzeitpunkt ist in dieser Ausführungsform der Moment, an dem einer der Sensoren 5 anspricht.

Auf diese Weise wird erreicht, daß die Stückgutstapel während ihrer Bewegung auf dem Ausgleichsförderer 3 ihre eigene Gewichtsinformation "mitnehmen" und zu jedem Zeitpunkt die Anzeigeeinrichtungen die Gewichtsabweichung des gerade vorliegenden Stückgutstapels darstellen.

In Förderrichtung hinter dem Ausgleichsförderer 3 und dem Normalförderer 2 ist eine ebenfalls als Förderband ausgebildete Einschleusewippe 4 angeordnet, die um eine Achse 4a verschwenkbar ist, um selektiv Stückgutstapel entweder vom Ausgleichsförderer 3 oder - in der gezeigten Stellung - vom Normalförderer 2 zu übernehmen.

An die Einschleusewippe 4 schließt sich ein nicht dargestellter weiterer Förderer an, der beispielsweise zu einer Verpackungsmaschine führt.

Die Einschleusewippe 4 dient dazu, nach erfolgtem Gewichtsausgleich nunmehr Sollgewicht besitzende Stückgutstapel vom Ausgleichsförderer 3 zu übernehmen und in die Reihe von durch den Normalförderer 2 transportierten, von vornherein Sollgewicht aufweisenden Stückgutstapel einzugliedern.

Hierzu ist der in Förderrichtung letzte Einzelförderer 3c des Ausgleichsförderers 3 in Richtung des Normalförderers 2 geneigt, um einen besseren Anschluß der Einschleusewippe 4 zu ermöglichen und für einen sanfteren Übergang zu sorgen.

Da die erfindungsgemäße Ausgleichsvorrichtung somit lediglich eine einzige, von der Einschleusewippe 4 gebildete Ausgangsförderstrecke aufweist, muß dafür gesorgt werden, daß die vom Ausgleichsförderer 3 zu übernehmenden Stapel in Lücken zwischen den anfangs dem Normalförderer 2 übergebenen Stapel eingeschleust werden.

Dazu sind entlang des Normalförderers 2 in der Vorderwand 8a des Hauptkörpers 8 der Vorrichtung bevorzugt als Lichtschranken ausgebildete, in der Figur nicht dargestellte Sensoren angeordnet.

Diese sprechen auf sich vorbeibewegende, auf dem Normalförderer 2 liegende Stückgutstapel an und ermöglichen es somit, Lücken zwischen den Stückgutstapeln zu erkennen, die zuvor durch das Umleiten von Stückgutstapeln auf den Ausgleichsförderer 3 und den Aussortierförderer 7 entstanden sind.

Mit Hilfe dieser "Lückensensoren" kann folglich der richtige Zeitpunkt bestimmt werden, an dem die Lücken den Einschleusebereich erreichen und es somit der Verteilerwippe 4 gestatten, nach oben zu schwenken, einen Stückgutstapel zu empfangen und wieder zurück nach unten zu schwenken, ohne daß in der Zwischenzeit Stückgutstapel vom Normalförderer 2 in eine im unteren Bereich des Hauptkörpers 8 angeordnete Auffangwanne 9 fallen.

Um zu verhindern, daß versehentlich nicht ausgeglichene, vom Sollgewicht abweichende Stückgutstapel von der Einschleusewippe 4 übernommen werden, ist die erfindungsgemäße Vorrichtung derart ausgelegt, daß die Einschleusewippe nur dann betätigt wird, wenn zumindest an der in Förderrichtung letzten Ausgleichsstation ein erfolgter Gewichtsausgleich von der Bedienungsperson bestätigt wird.

Dazu ist vorzugsweise hinter der transparenten Abdeckung 6 eine als Lichttaster ausgebildete, nicht dargestellte Quittiereinrichtung vorgesehen, an der die Bedienungsperson im Anschluß an das Nachlegen oder Wegnehmen von Produktstücken lediglich die Hand vorbeizubewegen braucht, um die Weiterbewegung des Ausgleichsförderers 3 freizugeben. Die Lichttaster haben dabei bevorzugt eine Tastweite kleiner 100 mm, vorzugsweise kleiner 50 mm, um so Fehlquittierungen zu vermeiden. Ein Quittieren erfolgt in letztgenanntem Fall nur, wenn die Bedienungsperson ihre Hand nahe genug innerhalb der Tastweite am Lichttaster vorbeibewegt.

Die erfindungsgemäße Ausgleichsvorrichtung weist mit der Verteilerwippe 1 und der Einschleusewippe 4 jeweils nur eine einzige Eingangs- und Ausgangsförderstrecke auf und kann somit in bestehende Förderstrecken, die eine Aufschneide- mit einer Verpackungsmaschine verbindet, integriert werden.

Unterhalb der Auffangwanne 9 und des Hauptkörpers 8 angeordnete, vorzugsweise höhenverstellbare Füße 10 erleichtern dabei die Anpassung der erfindungsgemäßen Vorrichtung an die bestehenden Förderstrecken.

### Bezugszeichenliste

- 1: Verteilereinheit bzw. -wippe
- 1a: Achse
- 2: Normalförderer
- 3: Ausgleichsförderer
- 3a: Einzelförderer
- 3b: erster Einzelförderer
- 3c: letzter Einzelförderer
- 4: Einschleuseeinrichtung bzw. -wippe
- 4a: Achse
- 5: Sensoren
- 6: transparente Abdeckung
- 7: Aussortierförderer
- 8: Hauptkörper
- 8a: Vorderwand
- 9: Auffangwanne
- 10: Füße
- 33: Ausgleichsstationen
- A: Förderrichtung

## Patentansprüche

1. Ausgleichsvorrichtung zur Vereinheitlichung des Gewichts von Stückgutstapeln, insbesondere Tarierstation zum vorzugsweise manuellen Gewichtsausgleich von Käse- und/oder Wurstscheibenstapeln, mit wenigstens einem Normalförderer (2) für im wesentlichen Sollgewicht aufweisende Stückgutstapel, zumindest einem Ausgleichsförderer (3) für vom Sollgewicht abweichende Stückgutstapel und einer Verteilereinheit (1), mit der angelieferte Stückgutstapel gewichtsabhängig zwischen dem Normalförderer (2) und dem Ausgleichsförderer (3) verteilbar sind, wobei der Ausgleichsförderer (3) zur Unterscheidung ihm übergebener Stückgutstapel anhand ihres Gewichts ausgebildet ist.

2. Vorrichtung nach Anspruch 1,
dadurch **gekennzeichnet,**
daß das Gewicht auszugleichender Stückgutstapel betreffende Daten an den Ausgleichsförderer (3) übermittelbar sind, und/oder daß am Ausgleichsförderer (3) die Gewichtsabweichung jedes Stückgutstapels ablesbar ist, und/oder daß in Förderrichtung im wesentlichen unmittelbar vor der Verteilereinheit (1) eine Wägeeinrichtung zur Bestimmung des Gewichts angelieferter Stückgutstapel vorgesehen ist.

3. Vorrichtung nach einem der vorhergehenden Ansprüche,
dadurch **gekennzeichnet,**
daß wenigstens eine Einschleuseeinrichtung (4) vorgesehen ist, mit der an den Ausgleichsförderer (3) verteilte Stückgutstapel nach erfolgtem Gewichtsausgleich in die von der Verteilereinheit (1) dem Normalförderer (2) übergebenen Stückgutstapel eingliederbar sind, wobei insbesondere die Stückgutstapel in Lücken zwischen den von der Verteilereinheit (1) dem Normalförderer (2) übergebenen Stückgutstapel einschleusbar sind.

4. Vorrichtung nach einem der vorhergehenden Ansprüche,
dadurch **gekennzeichnet,**
daß der Normalförderer (2) und/oder der Ausgleichsförderer (3) mit einer das Vorhandensein oder Fehlen von Stückgutstapeln erkennenden Sensoranordnung versehen ist, die vorzugsweise mehrere entlang der jeweiligen Förderstrecke angeordnete, bevorzugt als Lichtschranken ausgebildete Sensoren (5) umfaßt, und/oder daß die Einschleuseeinrichtung (4) nur im Anschluß an einen insbesondere manuell erfolgenden Gewichtsausgleich in Bewegung versetzbar ist, wobei insbesondere die Einschleuseeinrichtung (4) nur durch eine vorzugsweise manuell erfolgende Bestätigung des Gewichtsausgleichs in Gang setzbar ist.

5. Vorrichtung nach einem der vorhergehenden Ansprüche,
dadurch **gekennzeichnet,**
daß der Ausgleichsförderer (3) eine Mehrzahl von vorzugsweise im wesentlichen baugleichen Ausgleichsstationen (33) umfaßt, wobei insbesondere an jeder Ausgleichsstation (33) zu jedem Zeitpunkt die Gewichtsabweichung eines gerade vorliegenden Stückgutstapels ablesbar ist, und/oder daß der Ausgleichsförderer (3), insbesondere jede Ausgleichsstation (33) eine Anzeigeeinrichtung umfaßt, mit der die Gewichtsabweichung als Anzahl fehlender oder überzähliger Produktstücke, insbesonder Käse- oder Wurstscheiben darstellbar ist, und/oder daß die Einschleuseeinrichtung (4) lediglich im Anschluß an einen Gewichtsausgleich des in Förderrichtung letzten Stückgutstapels des Ausgleichsförderers (3) in Bewegung versetzbar ist.

6. Vorrichtung nach Anspruch 5,
dadurch **gekennzeichnet,**
daß zur Bestätigung des Gewichtsausgleichs eine manuell bedienbare, vorzugsweise als Lichttaster ausgebildete, insbesondere im Bereich jeder Ausgleichsstation (33) angeordnete Quittiereinrichtung vorgesehen ist, wobei insbesondere der Lichttaster eine Tastweite kleiner 100 mm, vorzugsweise kleiner 50 mm aufweist.

7. Vorrichtung nach einem der vorhergehenden Ansprüche,
dadurch **gekennzeichnet,**
daß der Normalförderer (2) als Förderband ausgebildet ist, und/oder daß der Ausgleichsförderer (3) eine Mehrzahl aufeinanderfolgender, vorzugsweise jeweils als Förderband ausgebildeter Einzelförderer (3a) umfaßt, die getrennt voneinander und/oder abschnittsweise synchron antreibbar sind, und/oder daß wenigstens ein Aussortierförderer (7) vorgesehen ist, an den vorzugsweise mittels der Verteilereinheit (1) Stückgutstapel übergebbar sind, deren Gewicht jeweils außerhalb eines vorgebbaren, das Sollgewicht einschließenden Toleranzbereichs liegt, und/oder daß der Ausgleichsförderer (3), insbesondere dessen Einzelförderer (3a), und/oder der Normalförderer (2) und/oder der Aussortierförderer (7) getaktet antreibbar ist bzw. sind.

8. Vorrichtung nach einem der vorhergehenden Ansprüche,
dadurch **gekennzeichnet,**
daß die Verteilereinheit und/oder die Einschleuseeinrichtung als verstellbare, in Abhängigkeit von ihrer Stellung die Förderstrecke eines der Förderer (2, 3, 7) verlängernde Transportwippe (1, 4) ausgebildet sind/ist, wobei insbesondere die Transportwippe als Förderband ausgebildet ist.

9. Vorrichtung nach einem der vorhergehenden Ansprüche,
dadurch **gekennzeichnet,**
daß sie zur Anordnung zwischen einer Stückgutaufschneidemaschine und einer Verpackungsmaschine für Stückgutstapel ausgebildet ist, und/oder daß eine separate Waagestation zur manuellen Erzeugung von im wesentlichen Sollgewicht aufweisenden Stückgutstapeln vorgesehen ist.

10. Verfahren zum Vereinheitlichen des Gewichts von Stückgutstapeln, insbesondere zum vorzugsweise manuellen Ausgleichen des Gewichts von Käse- und/oder Wurstscheibenstapeln, insbesondere unter Verwendung einer Ausgleichsvorrichtung nach einem der Ansprüche 1 bis 9, bei dem angelieferte Stückgutstapel automatisch in Abhängigkeit von ihrem Gewicht auf wenigstens eine Normalförderstrecke (2) für im wesentlichen Sollgewicht aufweisende Stückgutstapel und zumindest eine Ausgleichsförderstrecke (3) für vom Sollgewicht abweichende Stückgutstapel aufgeteilt werden, wobei die der Ausgleichsförderstrecke (3) übergebenen Stückgutstapel anhand ihres Gewichts unterschieden werden und deren Gewicht jeweils vor dem Verlassen der Ausgleichsförderstrecke (3) durch vorzugsweise manuelles Nachlegen oder Wegnehmen von Produktstücken an das Sollgewicht angeglichen wird.
